**Europäisches Patentamt**

(19) **European Patent Office**

**Office européen des brevets**

(11) Veröffentlichungsnummer: **0 028 221**
**B1**

(12) **EUROPÄISCHE PATENTSCHRIFT**

(45) Veröffentlichungstag der Patentschrift:
**01.02.84**

(51) Int. Cl.³: **A 01 G 9/22**, E 06 B 9/26

(21) Anmeldenummer: **80900761.0**

(22) Anmeldetag: **05.05.80**

(86) Internationale Anmeldenummer:
**PCT/CH 80/00052**

(87) Internationale Veröffentlichungsnummer:
**WO 80/02356 (13.11.80 Gazette 80/26)**

(54) **ANLAGE ZUR ISOLIERUNG UND SCHATTIERUNG EINES GEBÄUDES WIE TREIBHAUS.**

(30) Priorität: **05.05.79 CH 4178/79**

(43) Veröffentlichungstag der Anmeldung:
**13.05.81 Patentblatt 81/19**

(45) Bekanntmachung des Hinweises auf die Patenterteilung:
**01.02.84 Patentblatt 84/5**

(84) Benannte Vertragsstaaten:
**FR**

(56) Entgegenhaltungen:
**DE - A - 1 582 871**
**DE - A - 2 635 423**
**FR - A - 2 355 445**
**US - A - 2 046 601**

(73) Patentinhaber: **HELBLING, Hans, Haus Sonneck,**
**CH-8560 Ottoberg bei Weinfelden (CH)**

(72) Erfinder: **HELBLING, Hans, Haus Sonneck,**
**CH-8560 Ottoberg bei Weinfelden (CH)**

(74) Vertreter: **Cabinet BERT, DE KERAVENANT &**
**HERRBURGER, 115, Boulevard Haussmann,**
**F-75008 Paris (FR)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Anlage zur Isolierung und Schattierung eines Gebäudes wie Treibhaus

Die vorliegende Erfindung betrifft eine Anlage zur Isolierung und Schattierung eines Gebäudes wie Treibhaus etc.

### Stand der Technik

Treibhausschattierungen wurden bisher meist durch aufgespritzte Schattierfarbe erreicht, welche je nach Jahreszeit mehr oder weniger aufgetragen wurde. Im Herbst wird die Farbe wieder vom Glas entfernt. Ein neueres System ist die Innenschattierung mittels durchbrochenen Schattiertüchern, meist im Verhältnis 70/30, d. h. bei gezogenen Tüchern kommen nur noch 30% des Außenlichts ins Treibhaus; umgekehrt das volle Licht minus dem beträchtlichen Lichtausfall, verursacht durch die Tücherrollen. In jedem Fall ist es unmöglich, ein für das Pflanzenwachstum optimales Licht zu schaffen. Erfahrungsgemäß benötigen nicht alle Pflanzen die gleichen Lichtverhältnisse. Bei sehr heißen Sommertagen ergibt sich bekanntlich ein Hitzestau im Treibhaus, da die Innentemperatur des Treibhauses trotz der Schattiertücher stark ansteigt und infolge des Tuchwiderstandes nicht genügend Warmluft durch die vorhandenen Dachlüftungen entweichen kann. Der Isolationswert bei nächtlich gezogenen Tüchern mit weißer Farbe beträgt laut Versuchen von Versuchsanstalten höchstens 3%. Im Hochsommer ist die Temperatur im Treibhaus trotz der Schattierung in der Regel viel zu hoch, z. T. weit über 30° C, so daß die Kulturen über die Mittagszeit einen mehrstündigen Wachstumsstillstand erleiden. Ab 25° C nimmt die Assimilation aber rapid ab. Die Pflanze schließt die Stomata (kleine Schlitze in den Blättern), um sich vor dem Vertrocknen zu schützen. Resultat: Das Wachstum ist eingestellt.

Neuerdings sind Schattierungen auf dem Markt, die mit Aluminiumfolien arbeiten. Es iwrd jede zweite Fensterbahn mit einer Alu-Folie voll abgedeckt, d. h. 50% des vorhandenen Lichtes werden weggenommen. Bei vollem Sonnenschein soll das restliche Licht infolge teilweiser Rückstrahlung genügen. Bei trüber Witterung verbleiben allerdings laut Angabe der Hersteller nur noch 35% Licht im Treibhausinnern. Zudem ist bekannt, daß Alu-Folien in der feuchten Treibhausluft schnell korrodieren und nach 6 Monaten weniger als 50% der auftreffenden Lichtstrahlen reflektieren. Steht ein Treibhaus im günstigsten Winkel zur Hochsommer-Sonnenlaufbahn, so soll der Schatten der Folienbahnen schnell genug wandern, um Verbrennungen auf den Kulturen zu vermeiden. Die wenigsten Treibhäuser stehen aber im günstigen Winkel zur Hochsommer-Sonnenlaufbahn. Die Schattierung wurde nun so ergänzt, daß auf einem Schieberrahmen weitere Alu-Folienbahnen mit gleichem Abstand angebracht werden. Diese werden in kurzen Intervallen auf die festmontierten Bahnen geschoben, so daß es im Treibhausinnern zeitweise ganz dunkel oder nur die Hälfte der Glasfläche bedeckt wird. Eine kontinuierlich regelbare Lichtintensität ist mit der Anlage nicht möglich. Nachts bietet die Anlage einen gewissen Kältestrahlenschutz. Der ganze Kubikmeterinhalt des Treibhauses muß aber voll geheizt werden.

Ein weiteres Schattierungssystem arbeitet mit dünnen Alu-Folien, welche drehbar auf zwei Längsachsen über das ganze Treibhaus gespannt sind. Der Spanneffekt ergibt eine entsprechende Querrollung der Folien, welche gegen die Mitte des Treibhauses am größten ist. Es bilden sich daher rasch 3—4 cm breite Schlitze, welche je nach Sonnenlaufbahn Verbrennungen ermöglichen. Die Alu-Folien korrodieren ebenfalls sehr schnell, die Bänder laden sich mit statischer Elektrizität auf, was Staubteile aus der Luft anzieht. Infolge der Korrosion des Alu-Metalls sind die Folien kaum zu reinigen und die anfängliche Reflektion von Licht und Wärme geht auf ein Minimum zurück.

Aus FR-A-2 355 445 kennt man auch eine Isolierungs- und Schattierungsanlage mit einem Lamellensystem, das in der Nacht die optimal mögliche Isolierung des oberen Teiles des Volumens der Sphäre vom unteren Teil dieses Volumens gestattet, und zwar durch vollständiges Schließen der Lamellen. Dieses System besteht aus eng aneinanderliegenden, senkrecht drehbaren Lamellen. Durch eine entsprechende Einstellung der Lamellen kann man die Kälte-, Wärme- und Lichtstrahlen reflektieren, wobei bei Schließen der Lamellen eine Trennungswandung geschaffen wird und der untere Teil des Treibhausraumes von dessen oberem getrennt wird.

Eine ähnliche Anlage ist ferner aus DE-A-1 582 871 bekannt.

Trotz dieser Vorteile ist jedoch auch dieses System nicht zufriedenstellend, und zwar wegen der mangelnden Starrheit und der mangelnden Präzision der Steuerungsbewegung der Lamellen, wobei der Mangel an Präzision zu Lichteinfällen »zwischen den Lamellen« führen kann, was die Dichtigkeit der Wandung selbstverständlich beeinträchtigt.

Der Erfindung liegt die Aufgabe zugrunde, die bekannten Isolierungs- und Schattierungsanlagen zu verbessern und die diesen anhaftenden, oben beschriebenen Nachteile zu beheben.

Erfindungsgemäß wird diese Aufgabe durch die im Kennzeichen der Patentansprüche genannten Merkmale gelöst.

Auf der beiliegenden Zeichnung ist der Erfindungsgenstand in einer beispielsweisen Ausführungsform dargestellt, und zwar zeigt

— Fig. 1 einen Querschnitt durch ein Treibhaus,

— Fig. 2 einen Querschnitt durch eine Lamelle in größerem Maßstab und

— Fig. 3 einen ebensolchen in einer Variante.

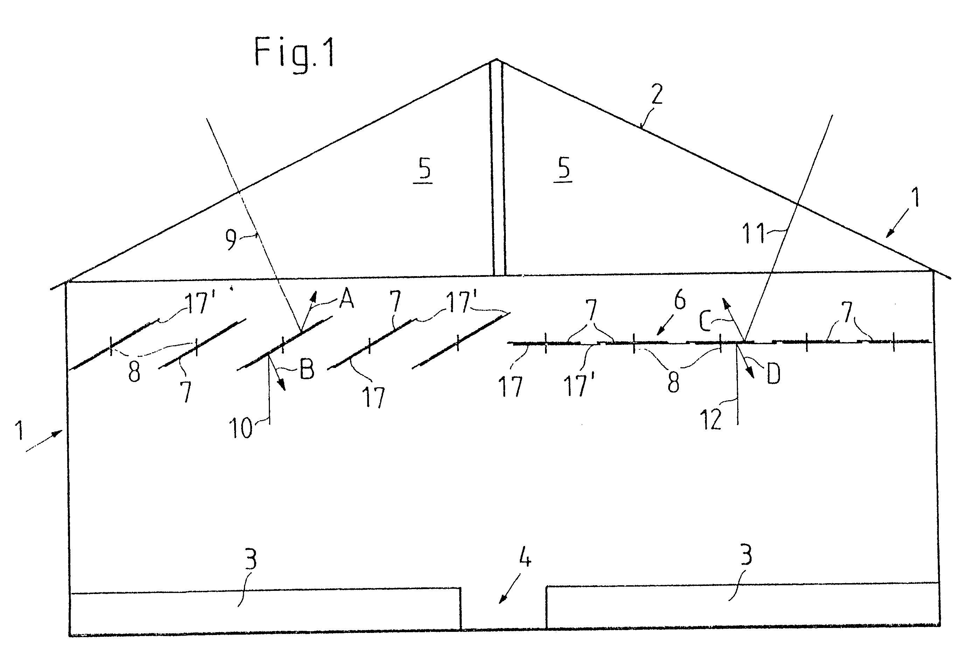

Nach Fig. 1 bezeichnet 1 ein schematisch dargestelltes Treib- oder Gewächshaus, welches ein Satteldach 2 aus Glas besitzt. Das Dach 2 kann selbstredend auch eine andere Struktur besitzen und beispielsweise einseitig oder flach sein. Mit 3 sind die Beete resp. Kulturen und mit 4 ist der Gehweg angedeutet. Der Dachraum 5 nimmt ungefähr Eindrittel der Höhe des Treibhauses in Anspruch. Im oberen Teil des Treibhauses ist eine in waagrechter resp. Querrichtung verlaufende Trennwand 6 angeordnet, welche aus nebeneinander angeordneten Lamellen 7 gebildet ist. Jede Lamelle 7 ist in der Vertikalebene um eine Achse 8, welche durch einen Strich angedeutet ist, drehbar. In der Figur 1 ist auf der linken Seite des Treibhauses ein Teil der Lamellen 7 in Schrägstellung teilweise geöffnet. Auf der rechten Seite des Treibhauses (Fig. 1) sind die Lamellen 7 dagegen geschlossen. Wie der Pfeil A zeigt, werden die auf die Lamellen 7 fallenden, von der Sonne ausgehenden Licht- bzw. Wärmestrahlen 9 in Aufwärtsrichtung zurück reflektiert. Der von den Beeten resp. Kulturen 3 aufsteigende kühle Luftstrom 10 wird, wie der Pfeil B erkennen läßt, nach unten zurück reflektiert. Bei geschlossenen Lamellen 7 (rechte Seite in Fig. 1) wird der durch das Glasdach 2 bei kühlen Zeiten eindringende Kaltluftstrom 11 gemäß Pfeil C nach oben umreflektiert und kann nicht in den Unterteil des Treibhauses und zu den Beeten resp. Kulturen 3 gelangen. Andererseits wird der von den Beeten 3 aufsteigende Luftstrom 12, welcher in der Regel relativ warm ist, auf die Unterseite der Lamellen 7 auftreffen, um alsdann gemäß Pfeil D nach unten reflektiert zu werden.

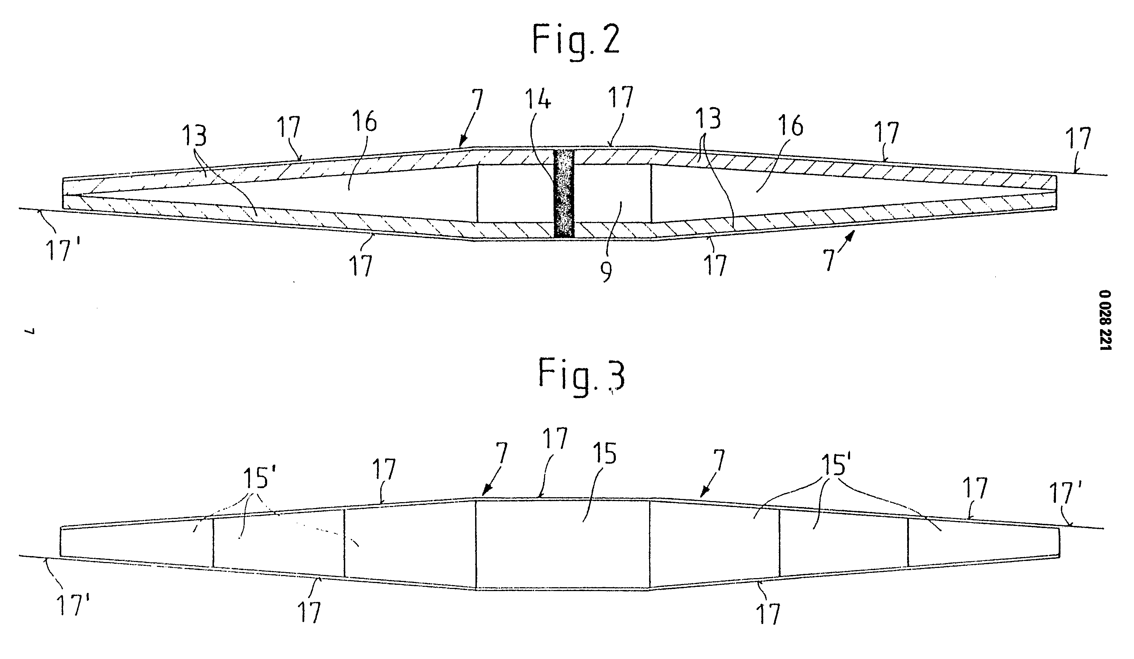

Die Lamellen 7 sind ellipsenförmig, wie aus Fig. 2 und 3 hervorgeht, so daß die zurückgeworfenen Licht- und Wärmestrahlen zerstreut und damit Brennwirkungen vermieden werden.

Der Kern jeder Lamelle 7 (Fig. 2) besteht aus zwei vorgespannten, ca. 3 mm dicken Kunststoffstreifen 13, z. B. aus Polystyrol. Dazwischen ist ein vorgespanntes Stahlband 14 eingebaut, welches zu starke Durchbiegungen der Lamellen 7 in der Waagrechtlage zu verhindern bezweckt. Mit einem Mittelkern 15 aus Schaumkunststoff wie Polystyrolhartschaum sind die Streifen 13 verklebt, wodurch Luftkammern 16 gebildet werden. Die Außenseiten der Streifen 13 sind mit je einer unter Hochvakuum aluminisierten Folie 17, z. B. aus Polyester verkleidet. Auf der Innenseite dieser Folie 17 ist ein nicht besonders gezeichneter Korrosions-Schutzlack angebracht. Dieser Korrosions-Schutz behindert die Reflektion der Folie 17 um einige Grade. Die Verkleidung der Lamellen 7 mit der Folie 17 wird jeweils mit zwei Hälften versetzt ausgeführt, so daß sich beidseitig je eine Folienüberlappung 17′ ergibt. Diese Überlappungen 17′ ermöglichen den sicheren Abschluß von jeweils zwei nebeneinander liegenden Lamellen 7 in geschlossenem Zustand, wie in Fig. 1 auf der rechten Seite gezeigt. Die Folie 17 hat eine Dicke von nur 12 Angström und die charakteristischen, ellipsenförmigen Lamellen 7 erreichen gemäß praktischen Versuchen einen Reflektionswert von über 90% von auftreffenden Wärme- oder Lichtstrahlen.

In Fig. 3 sind neben dem Kern weitere Fülleinsätze 15′ aus Schaumkunststoff eingefügt, welche die in Fig. 2 gezeigten Luftkammern 16 ausfüllen.

Gemäß Fig. 3 sind die Folien 17 direkt über die Teile 15, 15′ gezogen und an diesen festgeklebt. Der Kern 15 in der Mitte der Lamelle 7 ist prismatisch, während die seitlich desselben liegenden Fülleinsätze 15′ Viereckkörper sind, deren Dicke sich gegen die Lamellen verkleinert.

Durch die beschriebene Anlage wird erreicht, daß es möglich ist, nachts bei geschlossenen Lamellen ca. 1/3 des Totalraumes des Treibhauses abzuschließen, resp. den Unterteil vom Dachraum zu trennen. Werden zumindest im Winter die Seitenwände des Treibhauses in gleicher Weise isoliert, so können nach Feststellungen während der Nacht ca. 80% Heizenergie gespart werden. Erstens halten die Lamellen die Konvektionswärme unter diesen zusammen, und zweitens reflektieren die oberen Seiten der Lamellen die durch das Glasdach eindringenden Kältestrahlen, die unteren Seiten dagegen die von den Beeten aufsteigenden Wärmestrahlen bis zu 90% zurück. Mittels dieser Lamellen, deren Aufbau und deren Wirkung wird ein außerordentlicher K-Wert erzielt.

Ein gleich hoher Wert ergibt sich in umgekehrter Anwendung. Wenn von oben die Sonnenstrahlen auf die Lamellen fallen, werden die Wärmestrahlen weitgehend zurückgeworfen und unter den Lamellen herrscht im Treibhaus eine Temperatur, bei welcher die Assimilationsfähigkeit der Pflanzen erhalten bleibt. Messungen ergaben, daß die Temperatur unter den Lamellen normalerweise höchstens nur die Hälfte der über den Lamellen gemessenen Temperaturen beträgt. Dies ist der Fall, wenn die Lamellen um 80% geschlossen sind. Mit den verbleibenden Öffnungen zwischen den Lamellen ist es im unteren Teil des Treibhauses im Bereich der Pflanzen, bei der am Mittag herrschenden großen Außenhelligkeit genügend hell (Fig. 1, linke Hälfte).

Die Anlage ist über ein Lichtmessungs-Aggregat und eine elektronische Steuerung steuerbar. Das Lichtmessungs-Aggregat wie auch die elektronische Steuerung sind an sich bekannter Bauart und daher nicht besonders dargestellt.

Die Öffnung der Lamellen 7 am Morgen erfolgt über einen Tag/Nachtschalter mit einem einstellbaren Helligkeitspunkt. Vorerst öffnen sich die Lamellen 7 wählbar nur wenig mit einstellbarer Pause. Dies damit sich die obere kalte Luft mit der unter den Lamellen stehenden warmen Luft langsam mischen kann. Zur Verhinderung einer Schockwirkung, welche erfolgen würde, wenn die obere kalte Luft plötzlich herunterfallen würde, ist dies notwendig. Die gewünschte mittlere Helligkeit im Treibhaus kann nach Bedarf der Kulturen eingestellt werden. Mit einer Toleranz von ca. 1000 Lux regulieren nun die sich öffnenden und schließenden Lamellen, welche über ein konventionelles Hydraulik-System angetrieben werden, die eingestellte Helligkeit im Treibhaus, wobei gleichzeitig auch die Temperatur infolge der Öffnung und Schließung der Lamellen reguliert wird.

Abends, wenn es dämmert und der untere Sollwert erreicht wird, schließen die Lamellen 7 wieder voll während der Nacht (rechte Hälfte in Fig. 1). Durch einen Handendschalter können die Lamellen in jeder beliebigen Stellung innerhalb des ganzen Drehbereiches zum Stillstand gebracht werden, was im Winter bei flach einfallendem Licht zur Rückstrahlung desselben von Vorteil sein kann.

Der Innenraum der Lamellen kann hohl sein, und im Hohlraum ist ein in gebrochener Linie verlaufender Verstrebungskörper aus leichtem Werkstoff angeordnet. Der Verstrebungskörper kann auch aus zwei miteinander verbundenen Lagen bestehen.

Der beschriebene Erfindungsgegenstand läßt sich in analoger oder abgeänderter Bauweise auch in anderen als gärtnerischen Zwecken dienenden Gebäuden verwenden.

## Patentansprüche

1. Anlage zur Isolierung und Schattierung eines Gebäudes wie Treibhaus, in dessen Innenraum ein in Querrichtung verlaufendes Lamellen-System angeordnet ist, welches aus dicht nebeneinander angeordneten Lamellen besteht, von denen jede einen Kern, insbesondere aus Schaumkunststoff, besitzt und die in der Vertikalebene verdrehbar sind und mittels deren bei geeigneter Einstellung Kälte-, Wärme sowie Lichtstrahlen reflektiert werden können, wobei durch die Schließung der Lamellen eine Trennwand gebildet und der untere Raum des Gebäudes vom oberen Raumteil oder Dachraum isoliert werden kann, dadurch gekennzeichnet, daß jeweils im Kern (15) der Lamellen (7), ein vertikal zur Lamellenebene eingeklebtes vorgespanntes Stahlband (14), welches zu starke Durchbiegungen der Lamellen (7) zu verhindern bestimmt ist, vorgesehen sind.

2. Anlage nach Anspruch 1, dadurch gekennzeichnet, daß auf die beiden zur Oberfläche der Lamelle hin gerichteten Seiten des Kerns (15) unter Vorspannung Streifen (13) aufgeklebt sind.

3. Anlage nach einem der Ansprüche 1 und 2, dadurch gekennzeichnet, daß im Innern der Lamelle (7) beidseitig des Kerns (15) Luftkammern (16) vorgesehen sind.

## Claims

1. Apparatus for insulating and protecting from the sun a building such as a greenhouse, in the interior of which a system of plates is arranged extending in the transverse direction, which consists of plates arranged close to one another, each of which plates has a core, especially of a foamed synthetic material, and which are pivotable in the vertical plane and by means of which cold, warm and light radiation can be reflected, so that by closing the plates a partition can be formed and the lower space of the building isolated from the upper part of roof space, characterised in that in the core of the respective plates (7) is provided a vertical pre-stressed steel band (14) adhered to the plane of the plate, to present excessive sagging of the plates (7).

2. Apparatus according to claim 1, characterised in that, on both of the sides of the core (15) which are directed towards the surface of the plate, strips (13) are adhered under pretensioning.

3. Apparatus according to either one of claims 1 and 2, characterised in that air chambers (16) are provided in the interior of the plate (7) on both sides of the core (15).

## Revendications

1. Installation pour isoler et ombrager une construction telle qu'une serre par laquelle, dans l'espace intérieur de cette construction, on dispose un système de lamelles s'étendant dans le sens transversal qui est constitué de lamelles possédant chacune un noyau notamment en mousse de matière plastique, disposées étroitement serrées les unes à côté des autres, capables de tourner dans le plan vertical, et au moyen desquelles on peut réfléchir, par un réglage approprié, des rayons frigorifiques, calorifiques ainsi que lumineux, installation telle qu'en fermant les lamelles on forme une cloison de séparation isolant l'espace inférieur de la serre de la partie supérieure ou comble, installation caractérisée en ce que l'on prévoit dans chacun des noyaux (15) des lamelles (7), une bande d'acier (14) pré-tendue collée verticalement qui est destinée à empêcher les lamelles (7) de se courber trop fortement.

2. Installation selon la revendication 1, caractérisée en ce que l'on colle des deux côtés des noyaux (15) sous tension préalable des bandes (13).

3. Installation selon l'une quelconque des revendications 1 et 2, caractérisée en ce que l'on prévoit sur les deux côtés du noyau (15) des chambres d'air (16).

Fig.1

0 028 221

Fig.2

Fig.3